# EUROPÄISCHE PATENTANMELDUNG

(11) **EP 4 775 454 A1**
(43) Veröffentlichungstag der Anmeldung: **15.07.2026**
(21) Anmeldenummer: 25150697.8
(22) Anmeldetag: 08.01.2025
(51) Int. Cl.: B60R 11/04

(54) **VERBESSERTE HALTEVORRICHTUNG**

(71) Anmelder: Siemens Mobility GmbH, 80997 München (DE)
(72) Erfinder: Lüdtke, Eric, 47877 Willich (DE); Abati Catalina, Gonzalo, 28051 Madrid (ES); Carrizo Rubio, Gonzalo, 28470 Cercedilla, Madrid (ES); Halfmann, Martin, 51145 Köln (DE)
(74) Vertreter: Siemens Patent Attorneys

(57) **Zusammenfassung**

Die Erfindung betrifft eine Haltevorrichtung (10) mit einem Einbaurahmen (12), einer Abdeckung (14), welche derart übereinstimmend mit einer zu verschließenden Öffnung (16) eines Hohlraums (18) ausgeführt ist, dass die Abdeckung (14) überdeckungsfrei in der genannten Öffnung (16) aufnehmbar ist sowie einer Verbindungsvorrichtung (20), mittels welcher die Abdeckung (14) relativ zu dem Einbaurahmen (12) fixierbar ist und zwar derart, dass die Verbindungsvorrichtung (20) verdeckbar ist.

## Beschreibung

Die Erfindung betrifft eine Haltevorrichtung, eine Verwendung der Haltevorrichtung, ein System mit der Haltevorrichtung sowie ein Verfahren zur Montage und Demontage der Haltevorrichtung.

In öffentlichen Räumen oder in öffentlichen Verkehrsmitteln, werden verschiedenartige Hardwarekomponenten, wie Lautsprecher, WLAN-Antennen oder Kameras, vorgesehen. Aufgrund der öffentlichen Zugänglichkeit sind diese Hardwarekomponenten einer erhöhten Beschädigungs- und/oder Diebstahlsgefahr ausgesetzt. Daher werden diese häufig mit zusätzlichen Schutzvorrichtungen, wie einem Gehäuse oder einem Gitter, versehen und/oder aufwändig mit einem Untergrund verankert. Insbesondere bei schienengebundenen Fahrzeugen sind jedoch aufgesetzte Hardwarekomponenten aus ästhetischen Gründen sowie aus Platzgründen häufig unerwünscht. Daher werden diese häufig in Hohlräume integriert. Daneben werden betreiberseitig Anforderungen gestellt, dass Hardwarekomponenten rasch zugänglich sind, um eine Wartung, Instandhaltung, Reparatur und/oder einen Austausch vornehmen zu können. Zu diesem Zweck sind jedoch bislang häufig von außen leicht ersichtliche und zugängliche Befestigungsmittel vorgesehen. Dies eröffnet wiederum die Möglichkeit für unbefugte Dritte, rasch einen Zugriff auf die Hardwarekomponenten zu erlangen.

Wird als Hardwarekomponente beispielsweise eine Kamera vorgesehen, so treten aufgrund der integrierten Einbausituation teilweise störende Lichtquellen in einen Detektionsbereich der Kamera. Eine Qualität von Aufzeichnungen der Kameras kann dadurch erheblich beeinträchtigt werden. Beispielsweise kann durch Streulicht ein Dynamikbereich der Kamera überschritten werden und Kontraste können dadurch nicht mit einer ausreichenden Qualität aufgezeichnet werden. Infolgedessen können Anforderungen eine Bildauswertung betreffend häufig nicht erfüllt werden.

Der Erfindung liegt die Aufgabe zugrunde, eine verbesserte Haltevorrichtung bereitzustellen.

Diese Aufgabe wird gelöst durch eine Haltevorrichtung mit den Merkmalen des Anspruchs 1.

Des Weiteren ist es Aufgabe der Erfindung, eine Verwendung der Haltevorrichtung anzugeben.

Diese Aufgabe wird gelöst durch eine Verwendung mit den Merkmalen des Anspruchs 7.

Ferner liegt der Erfindung die Aufgabe zugrunde, ein System anzugeben, welches die Haltevorrichtung aufweist.

Diese Aufgabe wird gelöst durch ein System mit den Merkmalen des Anspruchs 8.

Überdies ist es eine Aufgabe der Erfindung, ein Verfahren zur Montage und ein Verfahren zur Demontage der Haltevorrichtung bereitzustellen.

Diese Aufgaben werden gelöst durch ein Montageverfahren mit den Merkmalen des Anspruchs 14 sowie durch ein Demontageverfahren mit den Merkmalen des Anspruchs 15.

Vorteilhafte Weiterbildungen sind Gegenstand jeweils abhängiger Unteransprüche.

Die erfindungsgemäße Haltevorrichtung weist einen Einbaurahmen auf. Der Einbaurahmen kann aus Kunststoff oder Metall gefertigt sein. Vorzugsweise begrenzt der Einbaurahmen eine Aufnahmeöffnung. Des Weiteren ist der Einbaurahmen vorteilhafterweise dazu eingerichtet, auf einer Innenseite einer Hohlraumwand angeordnet zu werden.

Zudem weist die Haltevorrichtung eine Abdeckung auf. Die Abdeckung ist derart übereinstimmend mit einer zu verschließenden Öffnung eines Hohlraums ausgeführt, dass die Abdeckung überdeckungsfrei in der genannten Öffnung aufnehmbar ist. Die genannte Abdeckung kann aus einem Kunststoff oder einem Metall gefertigt sein. Im Falle einer ebenen Hohlraumwand ist die Abdeckung in einer bevorzugten Weise als eine Platte, insbesondere als eine Aluminiumplatte, ausgeführt. In einer weiteren bevorzugten Ausführungsvariante ist die Abdeckung in einem zur Verwendung vorgesehenen Zustand als ein sichtbarer Abschluss der Haltevorrichtung ausgeführt. Zweckmäßigerweise ist die Abdeckung übereinstimmend mit einer die Öffnung begrenzenden Form des Abschnitts der Hohlraumwand ausgebildet.

Unter überdeckungsfrei aufnehmbar soll im Zusammenhang mit der vorliegenden Erfindung verstanden werden, dass die Abdeckung in einem in der zu verschließenden Öffnung aufgenommenen Zustand frei von einem Überstand ist, welcher den die Öffnung begrenzenden Abschnitt einer Hohlraumwand überdeckt. In anderen Worten ist die Abdeckung überdeckungsfrei ausgeführt, wenn diese in dem genannten aufgenommenen Zustand frei von einem seitlichen Überstand ist. In einem überdeckungsfreien Zustand kann weiterhin ein Versatz zwischen der Hohlraumwand und der Abdeckung vorliegen. Insbesondere weist eine Außenkontur der Abdeckung dieselbe Form auf wie eine die Öffnung begrenzende Kontur, wobei eine Abmessung der Abdeckung kleiner ist als eine Abmessung der die Öffnung begrenzenden Kontur.

Überdies weist die Haltevorrichtung eine Verbindungsvorrichtung auf. Mittels der Verbindungsvorrichtung ist die Abdeckung relativ zu dem Einbaurahmen fixierbar. Des Weiteren ist die Abdeckung mittels der Verbindungsvorrichtung derart mit dem Einbaurahmen verbindbar, dass die Verbindungsvorrichtung verdeckbar ist. Vorzugsweise ist die Verbindungsvorrichtung dadurch vollständig verdeckbar. Dadurch kann vermieden werden, dass die Verbindungsvorrichtung in einem montierten Zustand von außen ersichtlich ist. Eine Funktionsweise der Verbindungsvorrichtung kann daher verborgen werden. Dies erschwert ein Diebstahl.

Unter fixierbar soll im Zusammenhang mit der vorliegenden Erfindung verstanden werden, dass ein Objekt unbeweglich und positionsfest relativ zu einem Bezugsobjekt festlegbar ist. Dadurch kann erreicht werden, dass die Abdeckung relativ zu dem Einbaurahmen in einer reproduzierbaren Ausrichtung annehmbar ist. Insbesondere sind in einem fixierten Zustand eine Position und/oder eine Ausrichtung der Abdeckung relativ zu dem Einbaurahmen vorgegeben. Vorzugsweise weist die Verbindungsvorrichtung hierzu Anschläge unterschiedlicher Art auf, mittels welchen die Abdeckung relativ zu dem Einbaurahmen festlegbar ist.

In einer bevorzugten Ausführungsvariante ist die Verbindungsvorrichtung in einem verbundenen Zustand ausschließlich werkzeuggebunden lösbar.

Mittels der Haltevorrichtung kann eine von außen unsichtbare Verbindungsvorrichtung bereitgestellt werden. Eine rasche und zuverlässige Betätigung der Verbindungsvorrichtung von außen ist daher nur unter Kenntnis der Wirkungsweise der Verbindungsvorrichtung realisierbar. Dadurch kann Diebstahl und/oder Vandalismus vorgebeugt werden. Des Weiteren wird ein unbefugtes Öffnen oder gar eine unbefugte Entnahme der Abdeckung erheblich erschwert. Überdies ermöglicht die Haltevorrichtung, die Abdeckung in einer vorbestimmten Ausrichtung aufzunehmen und sodann lagefixiert zu halten. Insbesondere kann die Position sowie die Ausrichtung der Abdeckung im Falle einer Beaufschlagung mit einer während eines Betriebs zu erwartenden äußeren Krafteinwirkung beibehalten werden. Des Weiteren kann im bevorzugten Anwendungsfall auf Durchbrüche in der Abdeckung sowie auf von außen sichtbare Befestigungselemente verzichtet werden.

Eine vorteilhafte Weiterbildung sieht vor, dass ein erster Teil der Verbindungsvorrichtung mit dem Einbaurahmen verbunden ist. Dies ermöglicht eine kompakte Ausführung des Einbaurahmens und der Verbindungsvorrichtung. Der erste Teil der Verbindungsvorrichtung kann einstückig mit dem Einbaurahmen oder separat zu dem Einbaurahmen ausgeführt sein. Vorzugsweise ist der erste Teil der Verbindungsvorrichtung austauschbar mit dem Einbaurahmen verbindbar. Dadurch kann der erste Teil der Verbindungsvorrichtung unabhängig von dem Einbaurahmen ausgetauscht werden. Dies ermöglicht es, den Einbaurahmen objektgebunden zu installieren. Die Verbindungsvorrichtung kann dahingegen bedarfsgerecht ausgetauscht werden, beispielsweise im Falle einer Beschädigung oder im Falle einer Verwendung einer andersartigen Verbindungsvorrichtung. Die Haltevorrichtung ist dadurch flexibel anpassbar und vielseitig verwendbar.

Eine weitere vorteilhafte Weiterbildung sieht vor, dass ein zweiter Teil der Verbindungsvorrichtung mit der Abdeckung verbunden ist. Dadurch kann die Haltevorrichtung gewichtssparend ausgeführt werden. Ferner kann dadurch eine komfortabel handhabbare und rasch montierbare Abdeckung bereitgestellt werden. Ferner kann die Abdeckung an eine sich möglicherweise verändernde Umgebung oder sich verändernde Anforderungen aufwandsgünstig und rasch angepasst werden. Der zweite Teil der Verbindungsvorrichtung kann einstückig mit der Abdeckung oder separat zu der Abdeckung ausgeführt sein. Vorzugsweise ist der zweite Teil der Verbindungsvorrichtung stoffschlüssig mit der Abdeckung verbunden.

In einer bevorzugten Ausführungsvariante weist die Verbindungsvorrichtung vorbestimmte Anschlagpunkte auf, mittels welchen eine vorbestimmte Position und/oder Ausrichtung der Abdeckung relativ zu dem Einbaurahmen festgelegt ist. Alternativ oder zusätzlich können die Anschlagpunkte als Teil der Abdeckung und/oder des Einbaurahmens vorgesehen sein. Dadurch kann die Abdeckung auf eine bevorzugte Weise relativ zu dem Einbaurahmen fixiert werden.

Eine andere vorteilhafte Weiterbildung sieht vor, dass die Verbindungsvorrichtung als eine Rastverbindung oder eine Bajonettverbindung ausgeführt ist. Dadurch kann auf Durchbrüche in der Abdeckung verzichtet werden. Des Weiteren kann dadurch auf Verschraubungslösungen verzichtet werden. Zudem kann mithilfe einer Rastverbindung oder einer Bajonettverbindung ein unbefugtes Öffnen der Abdeckung weiter erschwert werden. Ferner kann dadurch aufwandsgünstig eine Lagefixierung der Abdeckung relativ zu dem Einbaurahmen erreicht werden. Überdies kann dadurch eine Zwangslage einer gegebenenfalls mittels der Haltevorrichtung aufgenommenen Hardwarekomponente realisiert werden. Auf aufwandsgünstige Weise kann daher einer Veränderung einer Lage der Abdeckung oder einer gegebenenfalls aufgenommenen Hardwarekomponente, beispielsweise infolge von Vibrationen oder äußeren mechanischen Einflüssen, entgegengewirkt werden. Im Falle einer Aufnahme einer Kamera als Hardwarekomponente kann des Weiteren ein vorbestimmter Blickbereich stets reproduzierbar auf einfache und zuverlässige Weise wiederhergestellt werden. Ein Aufwand zum Zwecke einer Ausrichtung der Kamera kann dadurch minimiert werden.

Vorzugsweise weist die Haltevorrichtung ein Traggestell auf. Mittels des Traggestells ist ein Objekt aufnehmbar. Vorzugsweise handelt es sich bei dem Objekt um eine der zuvor genannten Hardwarekomponenten. Besonders bevorzugt ist mittels des Traggestells eine Kamera aufnehmbar. Vorteilhafterweise wird die Haltevorrichtung als eine Kamerahalterung verwendet.

Mithilfe des Traggestells können verschiedenartige Objekte auf eine betriebssichere Weise in einem Hohlraum angeordnet werden. Beispielsweise können auf diese Weise Lautsprecher, WLAN-Antennen oder Kameras im öffentlichen Raum oder in öffentlichen Verkehrsmitteln gegen Beschädigung oder Entwendung gesichert montiert werden. Weiterhin kann dennoch rasch eine Wartung, Instandhaltung, Reparatur und/oder ein Austausch der Objekte vorgenommen werden. In einer bevorzugten Ausführungsvariante sind das Traggestell und die Abdeckung sowie der zweite Teil der Verbindungsvorrichtung miteinander verbunden. Mit einem Handgriff kann die Abdeckung mit der Haltevorrichtung und einem gegebenenfalls damit aufgenommenen Objekt lagerichtig montiert werden, während eine Demontage nur werkzeuggebunden erlaubt wird.

In einer vorteilhaften Ausführungsvariante ist vorgesehen, dass die Abdeckung eine Ausformung mit einer Ausnehmung aufweist, in welche zumindest ein Teil des genannten Objekts aufnehmbar ist. Vorzugsweise handelt es sich bei dem genannten Objekt um eine Kamera. Vorteilhafterweise ist mittels der Ausformung eine Linse der Kamera aufnehmbar. Vorzugsweise ist die Ausformung mithilfe der Ausnehmung als eine Störlichtblende ausgeführt. Dadurch kann die Kamera vor Streulichteinflüssen geschützt werden. Beispielsweise kann ein Helligkeitssensor der Kamera von einer Umgebungsbeleuchtung abgeschirmt werden. Die Ausnehmung ermöglicht es, einen vordefinierten Blickbereich bereitzustellen. Dadurch kann mithilfe der Verbindungsvorrichtung aufwandsgünstig eine reproduzierbare Ausrichtung der Ausnehmung der Abdeckung und damit des Blickbereichs der Kamera erreicht werden.

Vorzugsweise weist die Haltevorrichtung eine Justiervorrichtung auf, mittels welcher die Abdeckung relativ zu dem Einbaurahmen in einer vorbestimmten Ausrichtung positionierbar ist. Zweckmäßigerweise weist die Justiervorrichtung mehrere Justierelemente auf. Ein Teil der mehreren Justierelemente kann an der Abdeckung, ein weiterer Teil der mehreren Justierelemente kann an dem Einbaurahmen vorgesehen sein. Zweckmäßigerweise sind Justierelemente der Justiervorrichtung formschlüssig aufeinander abgestimmt. Besonders bevorzugt ist die Ausnehmung der Ausformung auf diese Weise in einer vorbestimmten Ausrichtung positionierbar. Ein mittels des Traggestells aufgenommenes Objekt kann dadurch komfortabel und aufwandsgünstig in einer vorbestimmten Ausrichtung mit der Haltevorrichtung aufgenommen werden.

Erfindungsgemäß ist des Weiteren vorgesehen, dass die erfindungsgemäße Haltevorrichtung in einem schienengebundenen Fahrzeug verwendet wird. Vorzugsweise wird die Haltevorrichtung in eine Hohlraumwand eines Innenraums des schienengebundenen Fahrzeugs integriert. Besonders vorteilhaft wird die Haltevorrichtung in einer Decke eines Innenraums des schienengebundenen Fahrzeugs integriert.

Ferner sieht die Erfindung ein System vor, welches die erfindungsgemäße Haltevorrichtung aufweist.

Das erfindungsgemäße System weist einen Abschnitt einer Hohlraumwand auf, welche eine Öffnung begrenzt. Diese Öffnung ist mittels der erfindungsgemäßen Haltevorrichtung verschließbar.

Die genannte Öffnung kann auf diese Weise zuverlässig und auf eine sichere Weise verschlossen werden. Dennoch kann rasch ein Zugang zu dem von der Hohlraumwand begrenzten Hohlraum ermöglicht werden. Auf von außen ersichtliche Befestigungsmittel, wie beispielsweise Schrauben, kann dahingegen verzichtet werden.

Eine vorteilhafte Weiterbildung des Systems sieht vor, dass der Einbaurahmen der Haltevorrichtung in einem montierten Zustand mit einer Innenseite des Abschnitts der Hohlraumwand verbunden ist. Vorzugsweise ist der Einbaurahmen stoffschlüssig mit der Innenseite des Abschnitts der Hohlraumwand verbunden. Der Einbaurahmen kann Aufnahmeelemente aufweisen, mittels welchen wenigstens ein Teil der Verbindungsvorrichtung austauschbar aufnehmbar ist. Vorliegend erfolgt eine Verbindung des Einbaurahmens der Haltevorrichtung mit der Innenseite des Abschnitts der Hohlraumwand derart, dass eine von dem Einbaurahmen begrenzte Aufnahmeöffnung oberhalb der von dem Abschnitt der Hohlraumwand begrenzten Öffnung angeordnet ist. Vorzugsweise wird ein lichtes Maß der Öffnung durch die Aufnahmeöffnung des Einbaurahmens begrenzt. Auf diese Weise ist eine genaue Positionierung der Abdeckung in der Öffnung auf einfache Weise erreichbar. Ferner kann der Einbaurahmen auf diese Weise starken Belastungen standhalten. So kann eine aufwandsgünstige Fixierung der Abdeckung sowohl relativ zu dem Einbaurahmen als auch relativ zu dem die Öffnung begrenzenden Abschnitts der Hohlraumwand erreicht werden. Ferner kann dadurch eine aufwandsgünstig konstruierbare Haltevorrichtung realisiert werden, welche im bevorzugten Anwendungsfall zudem Objekte unterschiedlicher Art halten kann.

Ferner sieht eine vorteilhafte Weiterbildung des Systems vor, dass die Verbindungsvorrichtung in einem montierten Zustand des Systems vollständig innerhalb eines von dem Abschnitt der Hohlraumwand begrenzten Hohlraums angeordnet ist. Im bevorzugten Anwendungsfall kann lediglich unter Kenntnis einer Betätigungsart der Verbindungsvorrichtung dieselbe gelöst werden. Eine Funktionsweise der Verbindungsvorrichtung kann dahingegen nicht von außen erkannt werden. Vandalismus und/oder Diebstahl wird dadurch erschwert.

Eine andere vorteilhafte Weiterbildung des Systems sieht vor, dass in dem montierten Zustand des Systems zwischen dem genannten Abschnitt der Hohlraumwand und der Abdeckung ein Betätigungsspalt vorgesehen ist. Durch diesen Betätigungsspalt ist die Abdeckung werkzeuggebunden demontierbar. Ein Durchbruch in der Abdeckung zum Zwecke einer Betätigung der Verbindungsvorrichtung kann dadurch vermieden werden. Des Weiteren kann so ein unauffälliger Zugang zur Verbindungsvorrichtung bereitgestellt werden. Überdies können Unterbrechungen einer Fläche der Hohlraumwand kleingehalten werden.

In einer vorteilhaften Ausführungsvariante weist der Betätigungsspalt eine Breite von höchstens 2 mm, vorzugsweise höchstens 1 mm und besonders bevorzugt höchstens 0,5 mm auf. Eine Betätigung der Verbindungsvorrichtung kann dadurch auf ein Spezialwerkzeug beschränkt werden.

Überdies sieht eine vorteilhafte Weiterbildung des Systems vor, dass in einem montierten Zustand der Abdeckung ein ebener Übergang zwischen der Außenseite des Abschnitts der Hohlraumwand und der Außenseite der Abdeckung vorgesehen ist. Dadurch kann ein gleichmäßiges Erscheinungsbild der Hohlraumwand bereitgestellt werden. Vorzugsweise kann eine ebene Wand- und/oder Deckenverkleidung realisiert werden. Dies ermöglicht es, Angriffspunkte kleinzuhalten. Einem Vandalismus kann dadurch weiter entgegengewirkt werden. Vorzugsweise ist in einem monierten Zustand der Abdeckung eine Außenfläche der Abdeckung derart parallel zu einer Außenfläche des die Öffnung begrenzenden Abschnitts der Hohlraumwand angeordnet, dass eine vorteilhaft kleine Parallelitätsabweichung von höchstens 0,4, vorzugsweise höchstens 0,3 und besonders bevorzugt höchstens 0,2, vorgesehen ist.

Des Weiteren kann das System ein Demontagewerkzeug aufweisen, mittels welchem die von der Abdeckung verdeckte Verbindungsvorrichtung lösbar ist. Das Demontagewerkzeug kann einteilig oder mehrteilig ausgeführt sein. Dadurch kann ein aufeinander abgestimmtes System derart bereitgestellt werden, dass die verdeckte Verbindungsvorrichtung betriebssicher werkzeuggebunden lösbar ist. Dies erschwert eine Demontage für unbefugte Dritte und ermöglicht dennoch eine rasche Demontage zum Zwecke einer Reparatur, Wartung, Instandhaltung und/oder eines Austauschs. Im bevorzugten Anwendungsfall kann eine Rastverbindung mittels Demontagewerkzeugs zuverlässig von außen durch den Betätigungsspalt hindurch gelöst werden. Vorzugsweise kann mittels des Demontagewerkzeugs eine Rückstellung von Rastelementen derart durchgeführt werden, dass diese gegen eine Federspannung betriebssicher ausgelenkt werden, um die Rastverbindung zerstörungsfrei zu lösen. Dadurch kann eine hohe Lebenserwartung der Haltevorrichtung und damit des Systems bereitgestellt werden.

Mittels des erfindungsgemäßen Verfahrens wird die erfindungsgemäße Haltevorrichtung montiert.

Das erfindungsgemäße Verfahren sieht vor, dass eine von dem Einbaurahmen der Haltevorrichtung begrenzte Aufnahmeöffnung derart innerhalb eines Hohlraums angeordnet wird, dass die Aufnahmeöffnung übereinstimmend mit einer von einer Hohlraumwand begrenzten Öffnung positioniert wird. Des Weiteren wird der Einbaurahmen der Haltevorrichtung mit einer Innenseite der die Öffnung begrenzenden Hohlraumwand verbunden. Vorzugsweise wird der Einbaurahmen stoffschlüssig mit der Innenseite der Hohlraumwand verbunden. Des Weiteren wird mittels der Verbindungsvorrichtung der Haltevorrichtung die Abdeckung der Haltevorrichtung mit dem genannten Einbaurahmen verbunden. Überdies wird mittels der genannten Abdeckung die Verbindungsvorrichtung verdeckt. Vorzugsweise wird die Verbindungsvorrichtung mittels der genannten Abdeckung derart verdeckt, dass diese von außen unsichtbar ist.

Dadurch kann ein effizientes und rasch durchführbares Montageverfahren bereitgestellt werden. Die Abdeckung kann rasch montiert werden. Ferner kann die von der Hohlraumwand begrenzte Öffnung zuverlässig mittels der Abdeckung verschlossen werden. Innerhalb des Hohlraums angeordnete Objekte können aufwandsgünstig und zuverlässig vor unbefugtem Zugriff oder Vandalismus geschützt werden. Ferner kann auf diese Weise eine ästhetische Hohlraumwand bereitgestellt werden, bei welcher in einer bevorzugten Ausführungsvariante die in die Hohlraumwand integrierte Abdeckung eben mit der übrigen Hohlraumwand ausgeführt ist. Zudem kann dadurch eine überstandsfreie Anordnung der Abdeckung in der Hohlraumwand zum Zwecke eines Verschließens der genannten Öffnung vorgesehen werden.

Des Weiteren ist erfindungsgemäß ein Verfahren zur Demontage der erfindungsgemäßen Haltevorrichtung vorgesehen.

Bei dem Demontageverfahren wird die Verbindungsvorrichtung der Haltevorrichtung gelöst, indem ein Demontagewerkzeug von außen in einen Betätigungsspalt zwischen der Abdeckung und dem die Öffnung begrenzenden Abschnitt der Hohlraumwand eingeführt wird. Vorzugsweise wird mittels des Demontagewerkzeugs eine Rastverbindung zwischen dem Einbaurahmen und der Abdeckung gelöst. Dadurch kann ein rasch und aufwandsgünstig durchführbares Demontageverfahren bereitgestellt werden. Eine Demontage kann vorzugsweise nur mittels eines vorbestimmten Demontagewerkzeugs realisiert werden. Dadurch kann ein Zugriff auf die Öffnung, welche mittels der Abdeckung verschlossen wird und/oder ein Zugriff auf hinter der Abdeckung angeordnete Objekte ohne ein Demontagewerkzeug allenfalls mit einer hohen Hürde erreicht werden. Vandalismus und Diebstahl kann auf diese Weise entgegengewirkt werden. Dahingegen kann eine Wartung, Instandhaltung, Reparatur und/oder ein Austausch aufwandsgünstig und rasch durchgeführt werden.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden. Bei den im Folgenden beschriebenen Figuren handelt es sich um schematische und nicht maßstabsgetreue Zeichnungen.

Es zeigen:
- FIG 1: eine Außenansicht auf ein Ausführungsbeispiel eines Systems, bei welchem ein Ausführungsbeispiel einer Haltevorrichtung in einen Abschnitt einer Decke eines Innenraums eines schienengebundenen Fahrzeugs integriert ist;
- FIG 2: eine Innenansicht auf das Ausführungsbeispiel der Haltevorrichtung in einem montierten Zustand;
- FIG 3: eine Schnittdarstellung durch den Abschnitt der Decke des genannten Innenraums mit dem Ausführungsbeispiel des Systems in einem montierten Zustand;
- FIG 4: eine Detaildarstellung der Haltevorrichtung in dem montierten Zustand mit Blick auf ein Ausführungsbeispiel der Verbindungsvorrichtung;
- FIG 5: eine Innenansicht auf ein Ausführungsbeispiel einer Abdeckung der Haltevorrichtung;
- FIG 6: eine Außenansicht auf das Ausführungsbeispiel der Abdeckung der Haltevorrichtung;
- FIG 7: eine Detaildarstellung eines Ausführungsbeispiels eines Einbaurahmens der Haltevorrichtung;
- FIG 8: eine Detaildarstellung eines Ausführungsbeispiels eines Demontagewerkzeugs der Haltevorrichtung;
- FIG 9: eine Illustration eines Montageverfahrens sowie eines Demontageverfahrens anhand eines schematischen Ablaufdiagramms.

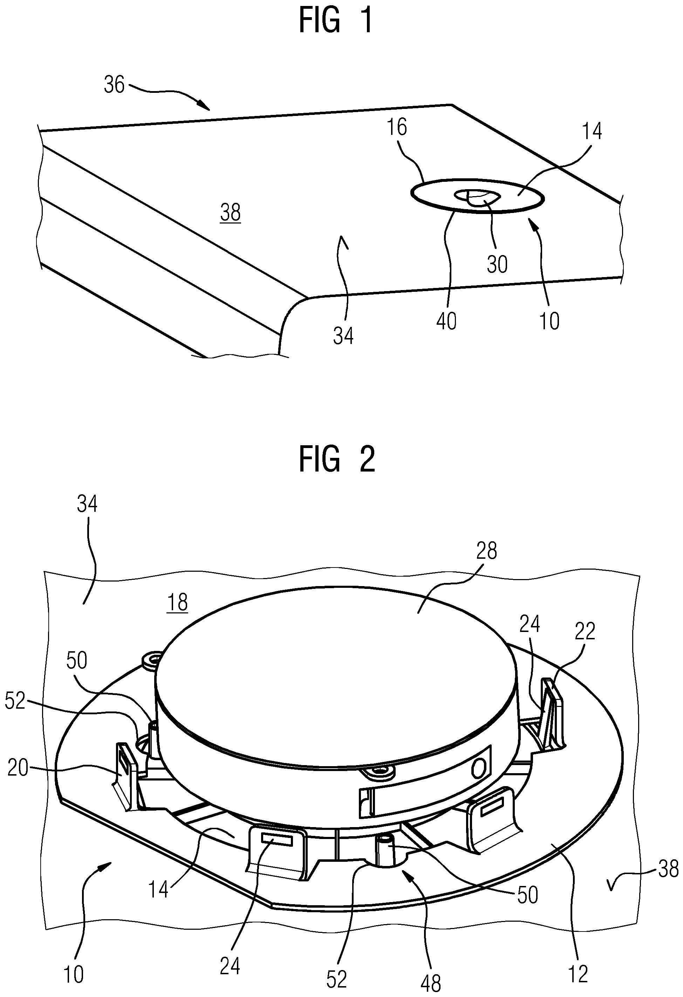

FIG 1 zeigt in einer schematischen Darstellung beispielhaft ein Ausführungsbeispiel eines Systems 36. Das System 36 weist ein Ausführungsbeispiel einer Haltevorrichtung 10 auf, welches in einer als Hohlraumwand 38 ausgeführten Decke 34 eines Innenraums eines nicht näher dargestellten schienengebundenen Fahrzeugs integriert ist.

Die Decke 34 begrenzt einen Hohlraum 18 und weist eine Öffnung 16 auf, durch welche der Hohlraum 18 von außen zugänglich ist. Zum Zwecke eines Verschlusses der Öffnung 16 weist die Haltevorrichtung 10 eine Abdeckung 14 auf. Diese ist eben mit einer Außenfläche der Decke 34 angeordnet. Des Weiteren ist die Abdeckung 14 als sichtbarer Abschluss der Haltevorrichtung 10 ausgeführt. Zudem ist die Abdeckung 14 derart übereinstimmend mit der zu verschließenden Öffnung 16 des Hohlraums 18 ausgeführt, dass die Abdeckung 14 überdeckungsfrei in der genannten Öffnung 16 aufnehmbar ist. Dadurch können eine Außenfläche der Decke 34 und eine Außenfläche der Abdeckung 14 parallel zueinander angeordnet werden.

Bei dem in FIG 1 dargestellten Abschnitt der Decke 34 handelt es sich beispielhaft um eine Decke 34 eines Innenraums eines nicht näher dargestellten schienengebundenen Fahrzeugs. Des Weiteren ist das Ausführungsbeispiel der Haltevorrichtung 10 als eine Kamerahalterung ausgeführt, mittels welcher eine Kamera 28 in den Hohlraum 18 hinter der Decke 34 angeordnet wird. Mithilfe der Kamera 28 kann beispielsweise der Innenraum des schienengebundenen Fahrzeugs überwacht werden. Die Haltevorrichtung 10 mit der zugehörigen Abdeckung 14 ermöglicht es dabei, die Kamera 28 geschützt gegen Vandalismus und gegen eine Gefahr einer Entwendung in der Decke 34 zu integrieren.

FIG 2 zeigt eine schematische Innenansicht des Hohlraums 18 mit Blick auf die Haltevorrichtung 10 in einem montierten Zustand.

Das Ausführungsbeispiel der Haltevorrichtung 10 weist einen Einbaurahmen 12 und eine Verbindungsvorrichtung 20 auf, mittels welcher die Abdeckung 14 mit dem Einbaurahmen 12 verbunden ist. Die Verbindungsvorrichtung 20 ist beispielhaft als Rastverbindung ausgeführt. Auf diese Weise wird vorliegend die Abdeckung 14 relativ zu dem Einbaurahmen 12 fixiert. In dem verbundenen Zustand verdeckt 106 die Abdeckung 14 die Verbindungsvorrichtung 20 derart, dass diese von außen unsichtbar ist. Auf diese Weise ist eine Funktionsweise der Verbindungsvorrichtung 20 nicht von außen ersichtlich. Des Weiteren kann die Abdeckung 14 frei von Durchbrüchen gehalten werden. Eine Demontage durch Dritte sowie einem damit verbundenen Diebstahl oder einer Beschädigung kann damit aufwandsgünstig entgegengewirkt werden.

Ferner ist eine Justiervorrichtung 48 vorgesehen. Diese weist beispielhaft aufeinander abgestimmte Justierelemente 50, 52 auf. Vorzugsweise sind diese auf eine nicht rotationssymmetrische Weise angeordnet. Erste Justierelemente 50 der genannten Justierelemente 50, 52 sind mit der Abdeckung 14 verbunden. Weitere Justierelemente 52 der genannten Justierelemente 50, 52 sind an dem Einbaurahmen 12 vorgesehen. Die ersten Justierelemente 50 sind als Stege ausgeführt. Die weiteren Justierelemente sind als Ausnehmungen ausgeführt, mittels welchen die genannten Stege formschlüssig positionierbar sind. Im bevorzugten Anwendungsfall kann dadurch eine lagerichtige Einbauposition und Ausrichtung der Kamera 28 erreicht werden. Zudem kann dadurch die Abdeckung 14 mit dem Traggestell 26 und der damit aufgenommenen Kamera 28 auf eine reproduzierbare Weise in einer vorbestimmten Ausrichtung mit dem Einbaurahmen 12 verbunden werden 104. Ein Ausrichten eines Blickbereichs der Kamera 28 kann dadurch aufwandsgünstig durchgeführt werden.

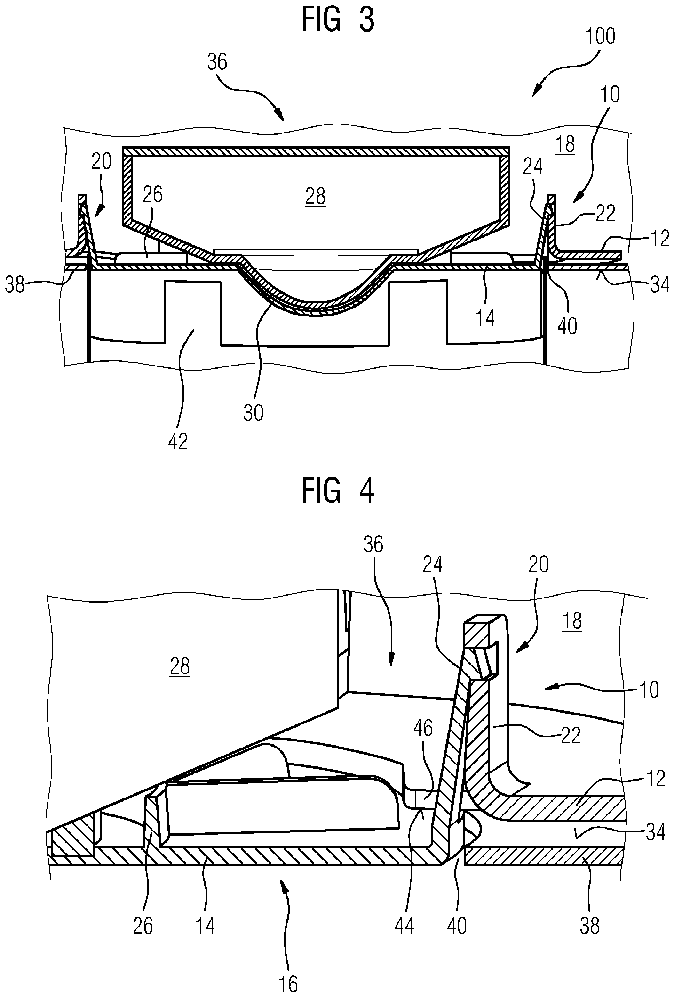

FIG 3 zeigt eine schematische Schnittdarstellung des Systems 36 in einem montierten Zustand sowie eine Illustration eines Verfahrens 100 zur Montage und Demontage der Haltevorrichtung 10.

Das Ausführungsbeispiel der Haltevorrichtung 10 weist ein Traggestell 26 auf. Dieses ist mit der Abdeckung 14 verbunden. Mittels des Traggestells 26 ist die zuvor genannte Kamera 28 oberhalb der Abdeckung 14 in dem Hohlraum 18 aufgenommen. Im Falle einer Demontage kann die Kamera 28 gemeinsam mit der Abdeckung 14 aus dem Hohlraum 18 entnommen werden.

Des Weiteren weist die Abdeckung 14 eine Ausformung 30 auf. In der Ausformung 30 ist eine Ausnehmung 32 vorgesehen. Die Ausformung 30 ist dazu eingerichtet, eine Linse der Kamera 28 aufzunehmen. Mittels der Ausnehmung 32 wird der Kamera 28 ein Blickbereich eröffnet. Mithilfe der Ausnehmung 32 kann der Innenraum des schienengebundenen Fahrzeugs mittels der Kamera 28 überwacht werden. Im Übrigen wird mittels der Ausformung 30 die Linse der Kamera 28 gegen Streulicht abgedeckt. Dadurch kann eine Aufnahmequalität von durch die Kamera 28 erfolgten Aufzeichnungen verbessert werden. Überdies kann ein Teil der Linse der Kamera 28 mittels der Ausformung 30 gegen mechanische Einflüsse und Verschmutzung geschützt werden.

Zur Montage der Haltevorrichtung 10 wird der Einbaurahmen 12 zunächst derart positioniert 102, dass eine von dem Einbaurahmen 12 begrenzte Aufnahmeöffnung übereinstimmend mit der von der Decke 34 begrenzten Öffnung 16 angeordnet ist. Daraufhin wird der Einbaurahmen 12 mit einer Innenseite der die Öffnung 16 begrenzenden Decke 34 verbunden 104. Vorliegend wird der Einbaurahmen 12 mit der Innenseite der Decke 34 verklebt. Wie beispielhaft in FIG 4 zu sehen, wird ein lichter Durchmesser der Öffnung 16 durch die von dem Einbaurahmen 12 begrenzte Aufnahmeöffnung begrenzt.

Ein erster Teil 22 der Verbindungsvorrichtung 20 ist vorliegend mit dem Einbaurahmen 12 verbunden ausgeführt. Des Weiteren weist die Verbindungsvorrichtung 20 einen zweiten Teil 24 auf, welcher als Teil der Abdeckung (14) vorgesehen ist. Der mit der Abdeckung 14 verbundene zweite Teil 24 der Verbindungsvorrichtung 20 wird zur Montage der Haltevorrichtung 10 durch die Öffnung 16 und die von dem Einbaurahmen 12 begrenzte Aufnahmeöffnung eingeführt. Dadurch wird der erste Teil 22 der Verbindungsvorrichtung 20 mit dem zweiten Teil 24 der Verbindungsvorrichtung 22 in Eingriff gebracht. Infolgedessen ist die Abdeckung 14 mit dem Einbaurahmen 12 verbunden 104. Wie beispielhaft in FIG 4 zu sehen, ist ein Anschlag erster Art 44 vorgesehen, welcher verhindert, dass die Abdeckung 14 in dem Hohlraum 18 versenkt wird. Beispielhaft weist der Einbaurahmen 12 den Anschlag erster Art 44 auf, welcher sich in dem Hohlraum 18 über die Öffnung 16 erstreckt. Ferner weist der Einbaurahmen 12 Anschläge zweiter Art 46 auf, mittels welchen eine Rotation der Abdeckung 14 verhindert wird. Auf diese Weise wird die Abdeckung 14 in einem mit dem Einbaurahmen 12 verbundenen Zustand in Ergänzung zu der Justiervorrichtung 48 positionsfest in einer vorbestimmten Ausrichtung bezogen auf den Einbaurahmen 12 fixiert. Die genannten Anschläge erster Art 44 und zweiter Art 46 können im einzelnen Anwendungsfall als Teil der Justiervorrichtung 48 betrachtet werden.

Des Weiteren ist in dem montierten Zustand der Haltevorrichtung 10 ein Betätigungsspalt 40 vorgesehen. Der Betätigungsspalt 40 befindet sich zwischen einem Abschnitt der Decke 34, welche die Öffnung 16 begrenzt, und der Abdeckung 14. Vorzugsweise beträgt eine Breite des Betätigungsspalts 40 höchstens 0,5 mm. Der Betätigungsspalt 40 ist beispielhaft in der Detaildarstellung in FIG 4 näher gezeigt.

Zur Demontage der Haltevorrichtung 10 wird beispielhaft die Verbindungsvorrichtung 20 gelöst 108. Hierzu ist ein Demontagewerkzeug 42 vorgesehen, welches beispielhaft in FIG 3 gezeigt ist. Dieses Demontagewerkzeug 42 wird zum Zwecke der Demontage von außen in dem Betätigungsspalt 40 zwischen der Abdeckung 14 und dem die Öffnung 16 begrenzenden Abschnitt der Decke 34 eingeführt 110. Auf diese Weise wird mittels des Demontagewerkzeugs 42 eine Rastverbindung zwischen dem Einbaurahmen 12 und der Abdeckung 14 gelöst 108. Daraufhin kann die Abdeckung 14 gemeinsam mit der Kamera 28 aus dem Hohlraum 18 entnommen werden. Die Kamera 28 kann sodann rasch und aufwandsgünstig ausgetauscht, gewartet, instandgehalten und/oder repariert werden.

FIG 4 zeigt in einer schematischen Darstellung auf die bereits im vorhergehenden Zusammenhang verwiesene Detaildarstellung der Haltevorrichtung 10.

Beispielhaft weist der zweite Teil 24 der Verbindungsvorrichtung 20 mehrere Rastnasen auf. Der erste Teil 22 weist korrespondierend dazu ausgeführte Ausnehmungen auf. In einem verbundenen Zustand der Verbindungsvorrichtung 20 greift jeweils eine Rastnase derart in eine korrespondierend dazu ausgeführte Ausnehmung ein, dass die Abdeckung 14 gegen eine Entnahme von dem Hohlraum 18 abgewandten Richtung, also in Richtung des Innenraums des schienengebundenen Fahrzeugs gesichert ist.

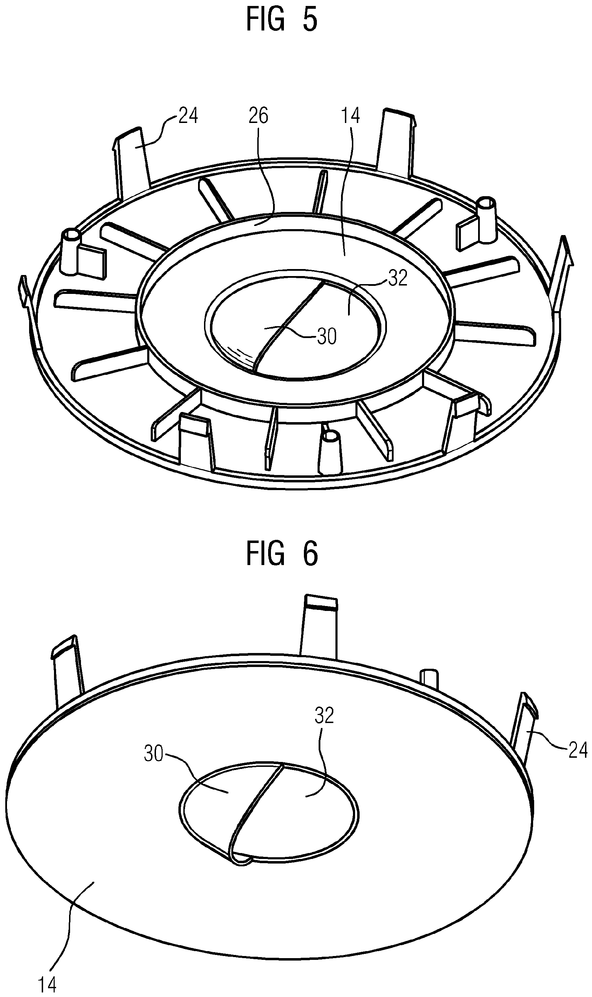

FIG 5 zeigt eine Innenansicht der Abdeckung 14 in einer schematischen Darstellung.

Mit der Abdeckung 14 ist das Traggestell 26 zur Aufnahme der Kamera 28 sowie der zweite Teil 24 der Verbindungsvorrichtung 20 verbunden. Die Rastnasen des zweiten Teils 24 der Verbindungsvorrichtung 20 sind vorliegend gleichmäßig über einen Umfang der Abdeckung 14 verteilt angeordnet. Ferner erstreckt sich eine jede der Rastnasen beispielhaft über einen Umfang der Abdeckung 14 hinaus. Dadurch kann eine Vorspannung des zweiten Teils 24 der Verbindungvorrichtung 20 erreicht werden, welcher im Rahmen einer Demontage entgegengewirkt werden muss. Die Ausformung 30 ist beispielhaft kugelförmig ausgeführt und mittig in der Abdeckung 14 angeordnet. Des Weiteren ist darin eine Ausnehmung 32 vorgesehen.

FIG 6 zeigt eine Außenansicht der Abdeckung 14 in einer schematischen Darstellung.

Die Abdeckung 14 ist vorzugsweise als eine Aluminiumplatte ausgeführt. Dadurch kann auf einfache Weise die Ausformung 30 sowie die darin vorgesehene Ausnehmung 32 vorgesehen werden. Ferner können mithilfe der Aluminiumplatte vorbestimmte Stabilitäts- und/oder Sicherheitsanforderungen erfüllt werden.

In der Ausformung 30 ist die genannte Linse der Kamera 28 derart anordenbar, dass mittels der zugehörigen Ausnehmung 32 ein Blickfeld der Kamera 28 eröffnet wird. Ein übriger Teil der Ausformung 30 dient als Streulichtblende, mittels welcher Störeinflüsse durch eine Umgebungsbeleuchtung verringert werden.

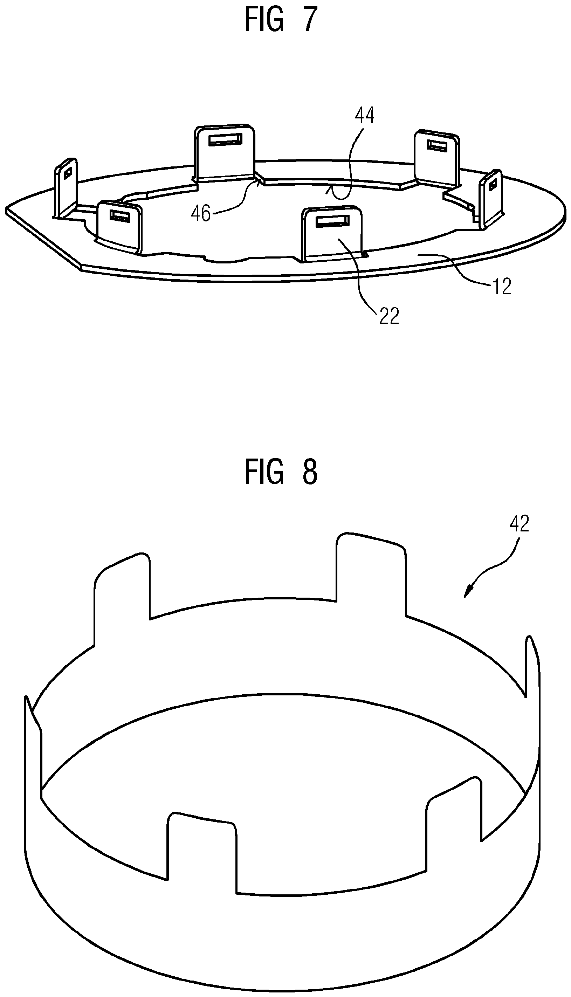

FIG 7 zeigt den Einbaurahmen 12 in einer schematischen Darstellung.

Der Einbaurahmen 12 weist vorliegend den zweiten Teil 24 der Verbindungsvorrichtung 20 auf. In der gezeigten Ausführungsvariante ist der Einbaurahmen 12 einteilig mit dem zweiten Teil 24 der Verbindungsvorrichtung 20 ausgeführt. In einer alternativen Ausführungsvariante kann der Einbaurahmen 12 separat von der Verbindungsvorrichtung 20 ausgeführt sein. Ferner sind in der vorliegend isolierten Darstellung des Einbaurahmens 12 der Anschlag erster Art 44 sowie die Anschläge zweiter Art 46 gezeigt.

FIG 8 zeigt das Ausführungsbeispiel des Demontagewerkzeugs 42, welches in den Betätigungsspalt 40 eingeführt werden kann. Mittels überstehender Stege des Demontagewerkzeugs 42 können die Rastnasen des zweiten Teils 24 der Verbindungsvorrichtung 20 aus den Ausnehmungen des zweiten Teils 24 der Verbindungsvorrichtung 20 gegen die zuvor genannte Vorspannung ausgelenkt werden. Dadurch wird die Verbindungsvorrichtung 20 gelöst 108. Daraufhin kann die Abdeckung 14 von dem Einbaurahmen 12 getrennt werden.

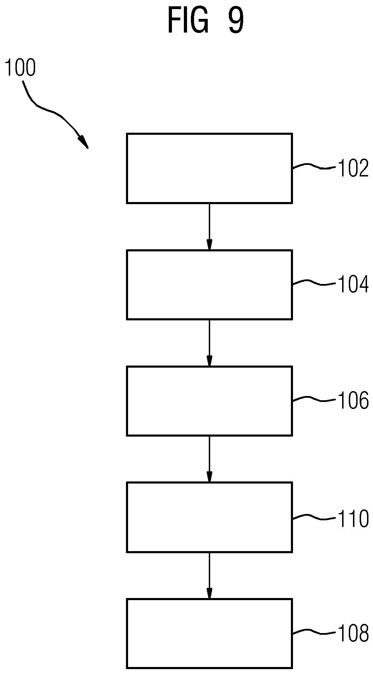

FIG 9 illustriert das im Zusammenhang mit Figur 3 beschriebene Beispiel des Verfahrens 100 anhand eines schematischen Ablaufdiagramms.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Haltevorrichtung (10) aufweisend:
- einen Einbaurahmen (12);
- eine Abdeckung (14), welche insbesondere derart übereinstimmend mit einer zu verschließenden Öffnung (16) eines Hohlraums (18) ausgeführt ist, dass die Abdeckung (14) überdeckungsfrei in der genannten Öffnung (16) aufnehmbar ist;
- eine Verbindungsvorrichtung (20), mittels welcher die Abdeckung (14) relativ zu dem Einbaurahmen (12) fixierbar ist und zwar derart, dass die Verbindungsvorrichtung (20) verdeckbar ist.

2. Haltevorrichtung (10) nach Anspruch 1,
**dadurch gekennzeichnet, dass**
ein erster Teil (22) der Verbindungsvorrichtung (20), vorzugsweise austauschbar, mit dem Einbaurahmen (12) verbunden ist.

3. Haltevorrichtung (10) nach Anspruch 1 oder 2,
**dadurch gekennzeichnet, dass**
ein zweiter Teil (24) der Verbindungsvorrichtung (20) als Teil der Abdeckung (14) vorgesehen ist.

4. Haltevorrichtung (10) nach einem der vorhergehenden Ansprüche,
**dadurch gekennzeichnet, dass**
die Verbindungsvorrichtung (20) als eine Rastverbindung oder eine Bajonettverbindung ausgeführt ist.

5. Haltevorrichtung (10) nach einem der vorhergehenden Ansprüche,
**dadurch gekennzeichnet, dass**
- ein Traggestell (26) vorgesehen ist, mittels welchem ein Objekt (28), vorzugsweise eine Kamera (28), aufnehmbar ist;
- die Abdeckung (14) eine Ausformung (30) mit einer Ausnehmung (32) aufweist, in welcher zumindest ein Teil des genannten Objekts (28), vorzugsweise eine Linse der Kamera (28), aufnehmbar ist.

6. Haltevorrichtung (10) nach einem der vorhergehenden Ansprüche,
**dadurch gekennzeichnet, dass**
eine Justiervorrichtung (48) vorgesehen ist, mittels welcher die Abdeckung (14) relativ zu dem Einbaurahmen (12) in einer vorbestimmten Ausrichtung positionierbar ist.

7. Verwendung der Haltevorrichtung (10) nach einem der vorhergehenden Ansprüche in einem schienengebundenen Fahrzeug, vorzugsweise in einer Decke (34) eines Innenraums des schienengebundenen Fahrzeugs.

8. System (36) aufweisend:
- einen Abschnitt einer Hohlraumwand (38), welche eine Öffnung (16) begrenzt;
- eine Haltevorrichtung (10) nach einem der Ansprüche 1 bis 6, mittels welcher die Öffnung (16) der Hohlraumwand (38) verschließbar ist.

9. System (36) nach Anspruch 8,
**dadurch gekennzeichnet, dass**
der Einbaurahmen (12) der Haltevorrichtung (10) in einem montierten Zustand mit einer Innenseite des Abschnitts der Hohlraumwand (38), vorzugsweise stoffschlüssig, verbunden ist und zwar derart, dass eine von dem Einbaurahmen (12) begrenzte Aufnahmeöffnung oberhalb der Öffnung (16) des Abschnitts der Hohlraumwand (38) angeordnet ist.

10. System (36) nach Anspruch 8 oder 9,
**dadurch gekennzeichnet, dass**
die Verbindungsvorrichtung (20) in einem montierten Zustand des Systems (36) vollständig innerhalb eines von dem Abschnitt der Hohlraumwand (38) begrenzten Hohlraums (18) angeordnet ist.

11. System (36) nach einem der Ansprüche 8 bis 10,
**dadurch gekennzeichnet, dass**
in dem montierten Zustand des Systems (36) zwischen dem genannten Abschnitt der Hohlraumwand (38) und der Abdeckung (14) ein Betätigungsspalt (40) vorgesehen ist, durch welchen hindurch die Abdeckung (14) werkzeuggebunden demontierbar ist.

12. System (36) nach einem der Ansprüche 8 bis 11,
**dadurch gekennzeichnet, dass**
in einem montierten Zustand der Abdeckung (14) ein ebener Übergang zwischen einer Außenseite des Abschnitts der Hohlraumwand (38) und einer Außenseite der Abdeckung (14) vorgesehen ist.

13. System (36) nach einem der Ansprüche 8 bis 12, **gekennzeichnet durch**
ein Demontagewerkzeug (42), mittels welchem die von der Abdeckung (14) verdeckte Verbindungsvorrichtung (20) lösbar ist.

14. Verfahren (100) zur Montage der Haltevorrichtung (10) nach einem der Ansprüche 1 bis 6,
bei welchen
- eine von dem Einbaurahmen (12) der Haltevorrichtung (10) begrenzte Aufnahmeöffnung derart innerhalb eines Hohlraums (18) angeordnet wird, dass die Aufnahmeöffnung übereinstimmend mit einer von einer Hohlraumwand (38) begrenzten Öffnung (16) positioniert wird (102);
- der Einbaurahmen (12) der Haltevorrichtung (10) mit einer Innenseite mit der die Öffnung (16) begrenzenden Hohlraumwand (38) verbunden wird (104);
- mittels der Verbindungsvorrichtung (20) der Haltevorrichtung (10) die Abdeckung (14) der Haltevorrichtung (10) mit dem genannten Einbaurahmen (12) verbunden wird (104);
- mittels der Abdeckung (14) die Verbindungsvorrichtung (20) verdeckt wird (106).

15. Verfahren (100) zur Demontage der Haltevorrichtung (10) nach einem der Ansprüche 1 bis 6,
bei welchen die Verbindungsvorrichtung (20) der Haltevorrichtung (10) gelöst wird (108), indem ein Demontagewerkzeug (42) von außen in einen Betätigungsspalt (40) zwischen der Abdeckung (14) und einem die Öffnung (16) begrenzenden Abschnitt der Hohlraumwand (38) eingeführt wird (110), wobei vorzugsweise mittels des Demontagewerkzeugs (42) eine Rastverbindung zwischen dem Einbaurahmen (12) und der Abdeckung (14) gelöst wird (108).
